# EUROPÄISCHE PATENTANMELDUNG

(11) **EP 3 896 566 A1**
(43) Veröffentlichungstag der Anmeldung: **20.10.2021**
(21) Anmeldenummer: 20170144.8
(22) Anmeldetag: 17.04.2020
(51) Int. Cl.: G06F 9/445, G06F 9/54, G06F 21/62

(54) **DATENAUSTAUSCH ZWISCHEN HARDWAREAPPLIKATIONEN EINES KONFIGURIERBAREN DIGITALBAUSTEINS**

(71) Anmelder: Siemens Aktiengesellschaft, 80333 München (DE)
(72) Erfinder: Aschauer, Hans, 81829 München (DE); Falk, Rainer, 85586 Poing (DE); Feist, Christian Peter, 80689 München (DE); Fries, Steffen, 85598 Baldham (DE); Maftun, Aliza, 81549 München (DE); Seuschek, Hermann, 81373 München (DE); Zeschg, Thomas, 81543 München (DE)

(57) **Zusammenfassung**

Verfahren zum Zugreifen auf gespeicherte Daten einer ersten Hardwareapplikation durch eine zweite Hardwareapplikation, wobei die erste Hardwareapplikation und die zweite Hardwareapplikation jeweils eine Teilkonfiguration eines konfigurierbaren Digitalbausteins beschreiben. Das Verfahren umfasst die Schritte:
- Laden (S1) der ersten Hardwareapplikation in eine Ausführungsumgebung des konfigurierbaren Digitalbausteins,
- Ausführen (S2) der ersten Hardwareapplikation in der Ausführungsumgebung, wobei erste Daten generiert werden,
- Speichern (S3) der ersten Daten auf einem Teilbereich eines dem konfigurierbaren Digitalbaustein zugeordneten Speichers, wobei ein Zugriff durch die erste Applikation auf den Teilbereich des Speichers gemäß einer vordefinierten ersten Regel erfolgt,
- Laden (S4) der zweiten Hardwareapplikation in die Ausführungsumgebung,
und
- Ausführen (S5) der zweiten Hardwareapplikation in der Ausführungsumgebung des konfigurierbaren Digitalbausteins in Abhängigkeit von mindestens einem Teil der ersten Daten, wobei ein Zugriff durch die zweite Hardwareapplikation auf den Teilbereich des Speichers gemäß einer vordefinierten zweiten Regel erfolgt.

## Beschreibung

Die Erfindung betrifft ein Verfahren zum Zugreifen auf gespeicherte Daten einer ersten Hardwareapplikation durch eine zweite Hardwareapplikation, wobei die erste Hardwareapplikation und die zweite Hardwareapplikation jeweils eine Teilkonfiguration eines konfigurierbaren Digitalbausteins beschreiben, und einen konfigurierbaren Digitalbaustein.

Von einem Basis-Softwaresystem unabhängig installierbare und aktualisierbare Softwareapplikationen werden künftig auch auf industriellen Geräten unterstützt. Insbesondere für einen konfigurierbaren Digitalbaustein, wie z.B. eine im Feld programmierbare Gatter-Anordnung (engl. Field Programmable Gate Array, FPGA) oder eine rekonfigurierbare anwendungsspezifische integrierte Schaltung (engl. Application-specific integrated circuit, ASIC), z.B. ein ASIC mit einem eingebetteten FPGA-Block oder mit rekonfigurierbaren Look-Up-Tabellen oder Zustandsübergangstabellen oder mit rekonfigurierbaren Gattern, können sogenannte Hardwareapplikationen genutzt werden, die eine Konfiguration des Digitalbausteins zumindest teilweise definieren (engl. Partial Rekonfiguration), um beispielsweise rechenintensive Aufgaben in Hardware auszulagern. Eine Kommunikation zwischen verschiedenen Hardwareapplikationen ist dabei wünschenswert.

Es ist daher die Aufgabe der Erfindung, die Verwendung von Hardwareapplikationen für konfigurierbare Digitalbausteine zu vereinfachen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein Verfahren zum Zugreifen auf gespeicherte Daten einer ersten Hardwareapplikation durch eine zweite Hardwareapplikation, wobei die erste Hardwareapplikation und die zweite Hardwareapplikation jeweils eine Teilkonfiguration eines konfigurierbaren Digitalbausteins beschreiben/kennzeichnen, umfassend die Schritte:
- Laden der ersten Hardwareapplikation in eine Ausführungsumgebung des konfigurierbaren Digitalbausteins,
- Ausführen der ersten Hardwareapplikation in der Ausführungsumgebung, wobei erste Daten generiert werden,
- Speichern der ersten Daten auf einem Teilbereich eines dem konfigurierbaren Digitalbaustein zugeordneten Speichers, wobei ein Zugriff durch die erste Applikation auf den Teilbereich des Speichers gemäß einer vordefinierten ersten Regel erfolgt,
- Laden der zweiten Hardwareapplikation in die Ausführungsumgebung,
   und
- Ausführen der zweiten Hardwareapplikation in der Ausführungsumgebung des konfigurierbaren Digitalbausteins in Abhängigkeit von mindestens einem Teil der ersten Daten, wobei ein Zugriff durch die zweite Hardwareapplikation auf den Teilbereich des Speichers gemäß einer vordefinierten zweiten Regel erfolgt.

Unter einem "konfigurierbaren Digitalbaustein" kann insbesondere ein FPGA, ein konfigurierbarer ASIC oder ein Complex Programmable Logic Device (CPLD) verstanden werden. Insbesondere kann es sich hierbei um einen rekonfigurierbaren Digitalbaustein handeln. Insbesondere kann eine partielle Konfiguration bzw. Rekonfiguration mittels Hardwareapplikationen realisiert werden.

Unter einer "Hardwareapplikation" kann insbesondere Programmcode oder ein Bitstream verstanden werden, mit dem der konfigurierbare Digitalbaustein zumindest teilweise konfiguriert ("partial reconfiguration") wird, um eine Funktion des Digitalbausteins zu realisieren. Eine Hardwareapplikation kann beispielsweise in einer Hardwarebeschreibungssprache definiert und als Konfigurationsdatei (z.B., FPGA Bitsream) übersetzt werden. Eine Hardware-applikation kann beispielsweise individuell oder als ein Teil eines App-Bundles aus Software-Applikationskomponenten und Hardwareapplikationskomponenten bereitgestellt werden. Eine Hardwareapplikation kann insbesondere eine Laufzeitumgebung auf dem Digitalbaustein benötigen, die insbesondere ein Einlesen bzw. Laden von Hardwareapplikationen ermöglicht sowie den Zugriff der Hardwareapplikationen auf Ressourcen des Digitalbausteins regelt. Die Laufzeitumgebung besteht dabei beispielsweise aus Bestandteilen, die in Software, in fester Hardware-Logik und/oder als Basis-Konfiguration des Digitalbausteins ("Basis-Bitstream") realisiert sind. Die Software kann dabei auf einer separaten CPU, auf einer festen CPU im Digitalbaustein (SoC) oder auf eine Soft-CPU im Digitalbaustein ablaufen.
Eine "Ausführungsumgebung" ist insbesondere in einem programmierbaren Digitalbaustein FPGAs implementiert, d.h. es kann sich um konfigurierbare "Lookup-Tables" und andere digitale Basiselemente, die miteinander variabel verschaltet werden können, handeln.

Für eine partielle (Re-)Konfiguration ("partial (re)configuration") kann ein Teil des programmierbaren Digitalbaustein isoliert konfiguriert werden. Neben einer partiellen Rekonfiguration kann auch auf einem FPGA eine rekonfigurierbare Ausführungsumgebung im FPGA-Design durch änderbare Tabellen oder konfigurierbare Logikfunktionen im eigenen Design (d.h. ohne Nutzung von partieller Rekonfiguration) realisiert werden.

Unter "Ausführen einer Hardwareapplikation" kann insbesondere eine Konfiguration des konfigurierbaren Digitalbausteins verstanden werden. Dabei können beispielsweise Zustandsdaten der jeweiligen Hardwareapplikation generiert werden und als erste Daten in einem Teilbereich des Speichers gespeichert werden.

Ein dem konfigurierbaren Digitalbaustein zugeordneter Speicher kann insbesondere ein interner Speicher des Digitalbausteins sein. Der Speicher ist insbesondere in Teilbereiche unterteilt, wobei verschiedene Hardwareapplikationen auf unterschiedliche oder auch dieselben Speicherbereiche zeitlich nacheinander oder gleichzeitig zugreifen können.

Die erste und die zweite Hardwareapplikation können in separaten rekonfigurierbaren Bereichen, d.h. in separaten Teilausführungsumgebungen der Ausführungsumgebung des konfigurierbaren Digitalbausteins geladen und zeitgleich aktiv sein. Ebenso ist es möglich, dass die erste und die zweite Hardwareapplikation in separaten rekonfigurierbaren Bereichen des konfigurierbaren Digitalbausteins geladen sind und zeitlich wechselweise aktiv sind. Weiterhin ist es möglich, dass die erste und die zweite Hardwareapplikation wechselweise in einen gemeinsamen rekonfigurierbaren Bereich des konfigurierbaren Digitalbausteins geladen werden und aktiv sind. Aktiv bedeutet beispielsweise, dass die geladene Hardwareapplikation Zustandswechsel durchführt, z.B. um eine Datenverarbeitung oder Signalverarbeitung zu realisieren. Eine Hardwareapplikation kann insbesondere nicht aktiv sein, wenn sie nicht in eine Ausführungsumgebung geladen ist oder wenn die Ausführungsumgebung in einen Stromsparzustand versetzt ist (power save) oder wenn kein Taktsignal für die Ausführungsumgebung vorliegt.

Der Zugriff auf einen Speicherbereich durch eine Hardwareapplikation wird gemäß einer jeweilig der Hardwareapplikation zugeordneten Regel (engl. Policy) geregelt. Diese definiert, welche Hardwareapplikation auf bestimmte Speicherbereiche Zugriff hat, d.h. Daten auf dem Speicherbereich speichern und/oder von diesem abrufen kann. Insbesondere kann durch eine Regel festgelegt werden, dass eine Hardwareapplikation auf mehr als einen Speicherbereich Zugriff hat. Eine Hardwareapplikation kann die jeweilige Regel beispielsweise umfassen. Alternativ kann eine jeweilige Regel in der Ausführungsumgebung dem konfigurierbaren Digitalbausteins bereitgestellt werden. Die Zugriffsregeln können beim Laden der Hardwareapplikation abhängig von der geladenen Hardwareapplikation gesetzt werden. Mehrere Sätze von Regeln können auf dem programmierbaren Digitalbaustein selbst oder in einem verbundenen Speicherelement hinterlegt sein. Ein Satz kann beispielsweise abhängig von der geladenen Applikation ausgewählt werden, z.B. abhängig von einer Identifizierungsinformation, einer Prüfsumme, einem Hash-Wert oder einer digitalen Signatur der Hardwareapplikation. In einer anderen Variante können die Regeln der eigentlichen Hardwareapplikation zugeordnet in einer Datei enthalten sein, z.B. in einer Manifest-Datei. Solche der Hardware-Applikation zugeordneten Regeln können beim Laden dieser Hardware-Applikation ebenfalls geladen werden, um die Zugriffsmöglichkeiten für diese Hardwareapplikation einzuschränken.

Es ist ein Vorteil der Erfindung, dass eine effiziente Interaktion von Hardwareapplikationen, d.h. ein Datenaustausch zwischen Hardwareapplikationen, durch geteilte Speicherbereiche ermöglicht wird. Unter "geteilten Speicherbereichen" sind insbesondere Teilbereich des Speichers zu verstehen, auf die mehrere Hardwareapplikationen zeitgleich oder zeitlich nacheinander zugreifen können.

In einer Ausführungsform des Verfahrens können die erste Regel und/oder die zweite Regel durch eine Funktion der Ausführungsumgebung definiert werden.

Beispielsweise kann ein Zugriff durch eine Funktionalität der Ausführungsumgebung, wie z.B. Schreib- und/oder Leserechte, geregelt werden. Die Ausführungsumgebung kann hierbei beispielsweise als Proxy für den Zugriff durch die Hardware-Applikation auf einen Systembus oder auf andere Komponenten des Digitalbausteins dienen. Eine Beschränkung kann entweder somit statisch vorgegeben sein, d.h. als Teil der Laufzeitumgebung.

In einer Ausführungsform des Verfahrens kann die erste Regel abhängig von der ersten Hardwareapplikation und/oder die zweite Regel abhängig von der zweiten Hardwareapplikation definiert werden.

Somit kann eine Regel gemäß der zugeordneten Hardwareapplikation definiert werden. Dies ermöglicht insbesondere eine dynamische Regelung. Zum Beispiel kann durch eine Regel festgelegt werden, dass für die zugeordnete Hardwareapplikation lediglich ein Teilbereich des Speichers freigeschaltet ist.

In einer Ausführungsform des Verfahrens können die erste Hardwareapplikation und die zweite Hardwareapplikation gleichzeitig in unterschiedliche Bereiche der Ausführungsumgebung geladen werden.

Dies ermöglicht insbesondere eine parallele Ausführung verschiedener Hardwareapplikationen. Über einen gemeinsamen Zugriff auf den Speicher können zusätzlich Daten zwischen den Hardwareapplikationen ausgetauscht werden.

In einer alternativen Ausführungsform des Verfahrens kann die zweite Hardwareapplikation zeitlich nach der ersten Hardware-applikation in denselben Bereich der Ausführungsumgebung geladen werden.

Dies ermöglicht insbesondere ein sukzessives Laden und Ausführen der Hardwareapplikationen, womit insbesondere eine Teilkonfiguration des konfigurierbaren Digitalbausteins erzielt werden kann.

In einer Ausführungsform des Verfahrens kann ein Zugriff auf den Teilbereich des Speichers durch die erste Hardwareapplikation und/oder durch die zweite Hardwareapplikation mittels eines kryptographischen Verfahrens geschützt werden.

Dies ermöglicht einen sicheren Datenaustausch zwischen den Hardwareapplikationen. Es können insbesondere eine Vielzahl von geeigneten, bekannten kryptographischen Verfahren genutzt werden.

In einer Ausführungsform des Verfahrens können die ersten Daten mittels eines kryptographischen Verfahrens kryptographisch geschützt auf dem Teilbereich des Speichers gespeichert werden.

Der kryptographische Schutz kann dabei insbesondere eine Datenintegrität und/oder die Vertraulichkeit umfassen.

In einer Ausführungsform des Verfahrens kann ein kryptographischer Schlüssel zur Anwendung in dem kryptographischen Verschlüsselungsverfahren lediglich der jeweiligen Hardwareapplikation bereitgestellt werden, die gemäß der jeweiligen Regel Zugriff auf den Teilbereich des Speichers hat.

Damit kann ein zusätzlicher Zugriffsschutz auf den Speicher realisiert werden. Insbesondere kann der Schlüssel lediglich der Hardwareapplikation bereitgestellt werden, die gemäß der jeweiligen Regel Zugriff auf den dem kryptographischen Schlüssel zugeordneten Teilbereich des Speichers hat.

In einer Ausführungsform des Verfahrens kann der Teilbereich des Speichers und/oder der kryptographische Schlüssel gelöscht werden, sobald die erste Hardwareapplikation und/oder die zweite Hardwareapplikation aus der Ausführungsumgebung entfernt werden.

Demnach können die Speicherbereiche bzw. die kryptographischen Schlüssel lediglich für einen gewissen Anwendungszeitraum zur Verfügung stehen. Dies kann insbesondere einen Missbrauch durch eine später geladene Hardwareapplikation verhindern.

In einer Ausführungsform des Verfahrens der kryptographische Schlüssel abhängig von der in die Ausführungsumgebung geladenen ersten Hardwareapplikation und/oder der zweiten Hardwareapplikation generiert werden.

Somit kann ein kryptographischer Schlüssel beispielswiese abhängig von der jeweiligen geladenen Hardwareapplikation abgeleitet werden. Dies ermöglicht beispielsweise eine Schlüsselgenerierung auf dem Digitalbaustein.

In einer Ausführungsform des Verfahrens kann der kryptographische Schlüssel in der Ausführungsumgebung bereitgestellt werden.

Zum Beispiel kann beim Laden der jeweiligen Hardwareapplikation oder dem ersten Verwenden des gemeinsamen Speicherbereiches eine Schlüsselgenerierung und -bereitstellung erfolgen.

In einer Ausführungsform des Verfahrens können die ersten Daten Zustandsdaten zu einem vorgegebenen Zeitpunkt der ersten Hardwareapplikation umfassen und die gespeicherten Zustandsdaten bei einem erneuten Laden der ersten Hardwareapplikation in die Ausführungsumgebung durch die erste Hardwareapplikation geladen werden.

Dies ermöglicht insbesondere ein Zwischenspeichern von Daten einer Hardwareapplikation, die zu einem späteren Zeitpunkt von derselben Hardwareapplikation wiederverwendet werden können. So kann insbesondere auf einem konfigurierbaren Digitalbaustein, insbesondere einem FPGA, mit wenigen konfigurierbaren Ressourcen mehrere Logikfunktionalitäten implementiert werden, wenn diese nicht gleichzeitig benötigt werden.

In einer Ausführungsform des Verfahrens kann bei einem erneuten Zugriff auf die ersten Daten durch die erste Hardwareapplikation und/oder die zweite Hardwareapplikation geprüft werden, ob die erste und die zweite Hardwareapplikation in der Ausführungsumgebung geladen sind und der Zugriff abhängig vom Prüfergebnis erfolgt.

So kann ein Zugriff auf die Daten im Speicher des Digitalbausteins lediglich freigegeben werden, wenn diejenigen Hardwareapplikationen geladen sind, die beim Zwischenspeichern geladen waren bzw. wenn die Daten durch die entsprechenden Hardwareapplikationen generiert wurden.

Gemäß einem zweiten Aspekt betrifft die Erfindung einen konfigurierbaren Digitalbaustein umfassend
- eine Ausführungsumgebung, die derart eingerichtet ist, die erste Hardwareapplikation und/oder die zweite Hardwareapplikation zu laden, wobei die erste Hardwareapplikation und die zweite Hardwareapplikation jeweils eine Teilkonfiguration des konfigurierbarer Digitalbausteins beschreiben, und die erste Hardwareapplikation auszuführen, wobei erste Daten generiert werden, und die zweite Hardwareapplikation in Abhängigkeit von mindestens einem Teil der ersten Daten auszuführen,
- einen Speicher umfassend Teilbereiche, wobei der Speicher derart eingerichtet ist, die ersten Daten auf einem Teilbereich des Speichers zu speichern, wobei ein Zugriff durch die erste Hardwareapplikation auf den Teilbereich des Speichers gemäß einer vordefinierten ersten Regel erfolgt und ein Zugriff durch die zweite Hardwareapplikation auf den Teilbereich des Speichers gemäß einer vordefinierten zweiten Regel erfolgt.

In einer vorteilhaften Ausführungsform umfasst der konfigurierbare Digitalbaustein ein Sicherheitsmodul, das derart eingerichtet ist,
- die erste Regel und/oder die zweite Regel zu definieren,
   und/oder
- den Teilbereich des Speichers zu löschen, sobald die erste Hardwareapplikation und/oder die zweite Hardwareapplikation aus der Ausführungsumgebung entfernt wird,
   und/oder
- einen kryptographischen Schlüssel zur Anwendung eines kryptographischen Verfahrens zum Schutz des Zugriffs auf den Teilbereich des Speichers und/oder auf die ersten Daten bereitzustellen und/oder zu löschen.

Ausführungsbeispiele des erfindungsgemäßen Verfahrens und konfigurierbaren Digitalbausteins sind in den Zeichnungen beispielhaft dargestellt und werden anhand der nachfolgenden Beschreibung näher erläutert. Es zeigen:
- Fig. 1:: ein Ausführungsbeispiel des erfindungsgemäßen Verfahrens als Ablaufdiagramm;
- Fig. 2:: ein erstes Ausführungsbeispiel des erfindungsgemäßen konfigurierbaren Digitalbausteins in schematischer Darstellung; und
- Fig. 3:: ein zweites Ausführungsbeispiel des erfindungsgemäßen konfigurierbaren Digitalbausteins in schematischer Darstellung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

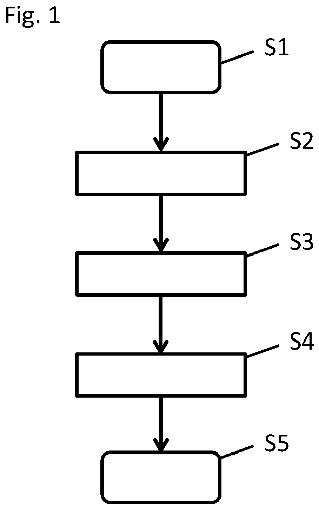

Figur 1 zeigt ein Ausführungsbeispiel des Verfahrens gemäß der Erfindung zum Zugreifen auf gespeicherte Daten einer ersten Hardwareapplikation durch eine zweite Hardwareapplikation als Ablaufdiagramm. In anderen Worten, das Verfahren bezieht sich auf einen Austausch von Daten zwischen mindestens zwei Hardwareapplikationen für einen konfigurierbaren Digitalbaustein. Eine Hardwareapplikation beschreibt bzw. kennzeichnet dabei mindestens eine Teilkonfiguration des konfigurierbaren Digitalbausteins. Der konfigurierbare Digitalbaustein ist vorzugsweise rekonfigurierbar ausgestaltet. So kann insbesondere eine partielle Rekonfiguration des programmierbaren Digitalbausteins erzielt werden.

Im ersten Schritt S1 des Verfahrens wird eine erste Hardware-applikation in eine Ausführungsumgebung des konfigurierbaren Digitalbausteins geladen. Die Ausführungsumgebung kann auch als Laufzeitumgebung bezeichnet werden. Sie ist insbesondere derart ausgestaltet, dass ein Nachladen einer Hardwareapplikation ermöglicht wird.

Im nächsten Schritt S2 wird die geladene erste Hardwareapplikation in der Ausführungsumgebung ausgeführt, d.h. eine erste Teilkonfiguration (partielle Konfiguration) des konfigurierbaren Digitalbausteins wird damit realisiert. Dabei werden erste Daten generiert. Erste Daten sind beispielsweise Zustandsdaten der ersten Hardwareapplikation bzw. Daten, die der ersten Hardware-applikation zugeordnet sind.

Im nächsten Schritt S3 werden diese ersten Daten auf einem Teilbereich eines Speichers, der dem konfigurierbaren Digitalbaustein zugeordnet ist, gespeichert. Beispielsweise handelt es sich hierbei um einen internen Speicher des Digitalbausteins. Dabei ist ein Zugriff der ersten Hardwareapplikation auf den Speicher durch eine vordefinierte erste Regel festgelegt. Die erste Regel ist vorzugsweise der ersten Hardwareapplikation zugeordnet.

Die erste Regel kann beispielsweise durch eine Funktion der Ausführungsumgebung fest vordefiniert sein. Alternativ kann die erste Regel abhängig von der ersten Hardwareapplikation definiert sein.

Die ersten Daten können insbesondere zusätzlich kryptographisch geschützt auf dem Speicher gespeichert werden. Dazu kann beispielsweise ein von der ersten Hardwareapplikation abhängiger kryptographischer Schlüssel bereitgestellt werden, um damit die ersten Daten zu sichern. Der kryptographische Schlüssel kann anschließend insbesondere lediglich derjenigen Hardwareapplikation bereitgestellt werden, die gemäß einer jeweils zugeordneten Regel Zugriff auf die Daten bzw. den entsprechenden Speicherbereich hat.

Eine Regel kann außerdem definieren, ob ein Speicherbereich für eine jeweilige Hardwareapplikation lesbar, schreibbar, löschbar ist. Weiterhin kann eine Regel definieren, dass ein Speicherbereich nur auf eine vorgegebene Art aktualisierbar ist (z.B. nur Erhöhen oder nur Verringern eines Zählerwerts, nur Setzen von Bits auf den Wert 1 (true, high), nur Löschen von Bits auf den Wert 0 (false, low)).

Der kryptographische Schlüssel kann insbesondere lediglich in der Ausführungsumgebung bereitgestellt werden, d.h. der Schlüssel wird lediglich auf dem Digitalbaustein bereitgestellt. So kann der Schlüssel einer berechtigten Hardwareapplikation auch durch die Ausführungsumgebung zugwiesen werden.

Im nächsten Schritt S4 wird eine zweite Hardwareapplikation in die Ausführungsumgebung geladen. Die zweite Hardwareapplikation kann insbesondere zeitlich nach der ersten Hardwareapplikation in denselben Bereich oder in unterschiedliche der Ausführungsumgebung geladen werden. Alternativ können die beiden Hardwareapplikationen auch zeitgleich in die Ausführungsumgebung geladen werden.

Im nächsten Schritt S5 wird die zweite Hardwareapplikation in der Ausführungsumgebung ausgeführt. Die Ausführung erfolgt dabei in Abhängigkeit von mindestens einem ersten Teil der gespeicherten ersten Daten, d.h. die zweite Hardwareapplikation greift auf die ersten Daten im Speicher zu. Die ersten Daten können beispielsweise von der zweiten Hardwareapplikation geladen werden, so dass davon abhängig eine zweite Teilkonfiguration des Digitalbausteins realisiert werden kann. Beispielsweise kann die zweite Hardwareapplikation auf Basis der gespeicherten Zustandsdaten der ersten Hardwareapplikation ausgeführt werden.

Der Zugriff der zweiten Hardwareapplikation auf die ersten Daten im Speicher wird dabei gemäß einer zweiten Regel geregelt, d.h. die zweite Hardwareapplikation hat lediglich dann auf den Speicherbereich und somit auf die ersten Daten Zugriff, wenn die zweite Regel eine Zugriffsberechtigung aufweist.

Die zweite Regel kann beispielsweise durch eine Funktion der Ausführungsumgebung fest vordefiniert sein. Alternativ kann die zweite Regel abhängig von der zweiten Hardwareapplikation definiert sein.

Außerdem ist es möglich, dass die erste Regel und/oder die zweite Regel sowohl abhängig von der ersten Hardwareapplikation wie auch von der zweiten Hardwareapplikation definiert sind. In einer weiteren Variante berücksichtigt die erste und/oder die zweite Regel, ob die erste Hardwareapplikation und/oder die zweite Hardwareapplikation geladen beziehungsweise aktiv sind.

Die erste Hardwareapplikation und/oder die zweite Hardwareapplikation können jeweils, nachdem sie ausgeführt wurden, aus der Ausführungsumgebung entfernt, d.h. entladen, werden. Ein erneutes Einlesen in die Ausführungsumgebung ist möglich. Beispielsweise kann die erste Hardwareapplikation, nachdem sie von der Ausführungsumgebung entfernt wurde, erneut geladen werden, so dass so beim erneuten Laden der ersten Hardwareapplikation auf die vorher gespeicherten Zustandsdaten zugegriffen werden kann. Ein erneuter Zugriff auf die ersten Daten kann dabei insbesondere gemäß einer vordefinierten Regel genehmigt werden, wenn die erste und die zweite Hardwareapplikation in die Ausführungsumgebung geladen sind. Dies kann durch einen Prüfmechanismus erfolgen, wobei geprüft wird, ob diejenigen Hardwareapplikationen geladen sind, die bei der ursprünglichen Generierung und Speicherung der ersten Daten geladen waren.

Es können insbesondere mehr als zwei Hardwareapplikationen zeitgleich oder nacheinander in die Ausführungsumgebung geladen werden, wobei jeweils mindestens eine der jeweiligen Hardwareapplikation zugeordnete Regel den Speicherzugriff regelt.

Eine jeweilige Regel kann insbesondere Zugriffsberechtigungen und/oder Zugriffsbeschränkungen aufweisen. Vor einem Speicherzugriff durch eine jeweilige Hardwareapplikation wird folglich geprüft, ob der Zugriff zulässig ist. Ist der Zugriff gemäß Regel zulässig, kann die Hardwareapplikation Daten darauf speichern und/oder laden. Ist der Zugriff gemäß Regel unzulässig, wird ein Zugriff verweigert, wobei beispielsweise eine Warnmeldung ausgegeben wird. Ein Schreibzugriff kann dabei beispielsweise blockiert werden, d.h. es findet kein Schreiben in den Speicher statt. Bei einem Lesezugriff können beispielsweise ein Statussignal (z.B. "denied") oder Ersatzwerte (z.B. alle Bits auf dem Wert 0 oder alle Bits auf dem Wert 1) bereitgestellt werden. In beiden Fällen wird der zugreifenden Hardware-Applikation nicht der Speicherinhalt des Speicherbereichs bereitgestellt, auf den zugegriffen wird.

Wenn der Zugriff auf Daten nicht erfolgreich ist, kann dies somit in der in die Ausführungsumgebung geladenen Hardwareapplikation behandelt werden. Zusätzlich kann eine Warnung über eine geeignete Schnittstelle an das Betriebssystem, das auf einer an den Digitalbaustein gekoppelten CPU läuft, gemeldet werden.

Alternativ kann eine Zugriffsbeschränkung auch dadurch erzielt werden, dass nicht zugelassene Speicherbereiche für eine Hardwareapplikation nicht freigeschalten, d.h. nicht sichtbar, sind. Dies kann beispielsweise durch die Ausführungsumgebung realisiert werden. Der Speicher erscheint dabei beispielsweise als ein kleinerer Speicher.

Der jeweilige Zugriff auf einen Teilbereich des Speichers durch die erste Hardwareapplikation und/oder durch die zweite Hardwareapplikation kann insbesondere mittels eines kryptographischen Verfahrens gesichert sein. Dabei können die Daten mit einem geeigneten Verfahren symmetrisch verschlüsselt werden und/oder mittels eines "message authentication codes" (MAC) integritätsgeschützt werden. Weiterhin kann ein Hash-Wert oder eine digitale Signatur als kryptographische Prüfsumme zum Schutz der Daten verwendet werden.

Zur zusätzlichen Absicherung der in dem Teilbereich des Speichers gespeicherten ersten Daten kann der Teilbereich des Speichers gelöscht werden, wenn die erste Hardwareapplikation und/oder die zweite Hardwareapplikation aus der Ausführungsumgebung entfernt wird.

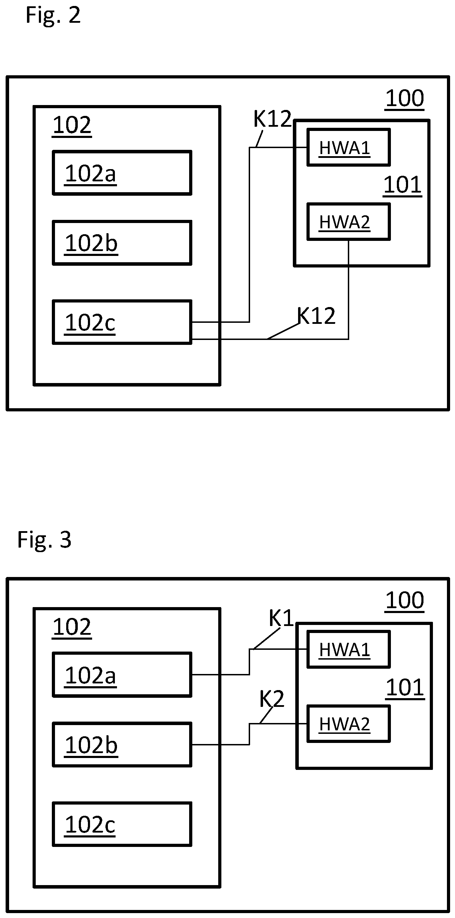

Figur 2 zeigt ein erstes Ausführungsbeispiel eines erfindungsgemäßen konfigurierbaren Digitalbausteins 100. Beispielsweise handelt es sich hierbei um einen rekonfigurierbaren FPGA. Der FPGA 100 umfasst eine Ausführungsumgebung 101 zum Laden und Ausführen von einer oder mehreren Hardwareapplikationen HWA1, HWA2 und einen Speicher 102. Der Speicher 102 kann vorzugsweise in Teilbereiche unterteilt werden. Die Hardwareapplikationen HWA1, HWA2 können gemäß vordefinierter Regeln Zugriff auf einen Teilbereich 102a, 102b, 102c des Speichers haben, um insbesondere Daten austauschen zu können. Eine entsprechende Regel kann beispielsweise auf dem FPGA gespeichert oder in einer jeweiligen Hardwareapplikation HWA1, HWA2 definiert sein.

Die Hardwareapplikationen HWA1, HWA2 können beispielsweise gemäß einer vordefinierten Regel Zugriff auf den gemeinsamen Speicherbereich 102c haben. So können bei einer Ausführung der ersten Hardwareapplikation HWA1 erste Daten auf dem Speicherbereich 102c gespeichert werden. Diese Zugriffsbeschränkung kann ergänzt werden durch einen kryptographischen Schutz der einzelnen Appexklusiven oder zwischen den Hardwareapplikationen geteilten Speicherbereiche. Der Schutz kann dabei die Datenintegrität und/oder die Vertraulichkeit umfassen. Die ersten Daten können beispielsweise mittels ein kryptographischen Schlüssels K12, der der ersten Hardwareapplikation HWA1 und der zweiten Hardware-applikation HWA2 zugeordnet ist, geschützt gespeichert werden. Die zweite Hardwareapplikation HWA2 kann beispielsweise abhängig von den ersten Daten ausgeführt werden. Dazu kann die zweite Hardwareapplikation HWA2 mittels des bereitgestellten Schlüssels K12 auf den gemeinsamen Speicherbereich 102c und dort auf die ersten Daten zugreifen.

Zur Realisierung dieses kryptographischen Schutzes kann der kryptographische Schlüssel K12 lediglich den nach der vordefinierten Regel zugriffsberechtigten Hardwareapplikationen HWA1, HWA2 zur Verfügung gestellt werden. Dabei können auch Gruppenschlüssel-Verfahren eingesetzt werden. Ein weitere geladene Hardwareapplikation, die beispielsweise gemäß der Regel keine Zugriffsberechtigung auf dem Speicherbereich 102c hat, bekommt den Schlüssel K12 nicht bereitgestellt.

Der kryptographischen Schlüssel K12 kann außerdem zum Beispiel in Abhängigkeit der geladenen Hardwareapplikationen HWA1, HWA2 abgeleitet werden. So können z.B. die Hash-Werte der geladene Hardwareapplikationen konkateniert und als Eingabe in eine Schlüsselableitungsfunktion mit einem Chip-spezifischen Schlüssel verwendet werden. Dies kann insbesondere beim Laden der Hardwareapplikationen oder dem ersten Verwenden des gemeinsamen Speicherbereiches erfolgen.

Eine Verschlüsselung bzw. Entschlüsselung erfolgt erfindungsgemäß durch eine Funktion der Ausführungsumgebung bzw. durch die Zugriffsregelung auf den Speicher, ohne dass zusätzliche Aktionen einer der Hardwareapplikationen notwendig sind.

Figur 3 zeigt ein zweites Ausführungsbeispiel eines erfindungsgemäßen konfigurierbaren Digitalbausteins 100. Es sind zwei Hardwareapplikationen HWA1, HWA2 gezeigt, die in die Ausführungsumgebung 101 des Digitalbausteins geladen sind. Den Hardwareapplikationen HWA1, HWA2 ist vorzugsweise jeweils eine Regel zugeordnet, die einen Zugriff auf mindestens einen Teilbereich eines internen Speichers 102 des konfigurierbaren Digitalbausteins 100 definiert.

Insbesondere kann eine erste Hardwareapplikationen HWA1 gemäß einer ersten vordefinierten Regel lediglich Zugriff auf einen Teilbereich 102a des Speichers 102 haben, um beispielsweise erste Daten dort zu speichern. Eine zweite Hardwareapplikation HWA2 kann gemäß einer vordefinierten zweiten Regel lediglich Zugriff auf einen zweiten Teilbereich 102b aufweisen.

Die erste und/oder die zweite Regel kann insbesondere durch eine Funktion der Ausführungsumgebung 101 statisch vorgegeben sein. Der jeweilige Zugriff auf einen jeweiligen Speicherbereich einer Hardwareapplikation kann außerdem durch ein kryptographisches Verfahren gesichert sein. So kann insbesondere für die erste Hardwareapplikation ein erster kryptographischer Schlüssel K1 und für die zweite Hardwareapplikation ein zweiter kryptographischer Schlüssel K2 generiert und auf dem konfigurierbaren Digitalbaustein gespeichert werden. Ein Zugriff auf die jeweiligen Speicherbereiche kann demnach lediglich erfolgen, wenn gemäß zugeordneter Regel eine Zugriffsberechtigung und ein passender Schlüssel vorliegt. Die Verschlüsselung bzw. Entschlüsselung erfolgt vorzugsweise auf dem Speicher des konfigurierbaren Digitalbausteins.

Die Erfindung bietet demnach insbesondere einen Mechanismus zum geschützten Verwalten und Austauschen von Daten durch und zwischen Hardwareapplikationen zur Laufzeit zu realisieren. Der Schutz kann sich dabei auf die Integrität, sowie die Vertraulichkeit der Daten beziehen und über eine statische oder dynamische Konfiguration der Zugriffskontrolle erfolgen und/oder mittels kryptographischer Methoden realisiert werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum Zugreifen auf gespeicherte Daten einer ersten Hardwareapplikation durch eine zweite Hardwareapplikation, wobei die erste Hardwareapplikation und die zweite Hardwareapplikation jeweils eine Teilkonfiguration eines konfigurierbaren Digitalbausteins beschreiben, umfassend die Schritte:
- Laden (S1) der ersten Hardwareapplikation in eine Ausführungsumgebung des konfigurierbaren Digitalbausteins,
- Ausführen (S2) der ersten Hardwareapplikation in der Ausführungsumgebung, wobei erste Daten generiert werden,
- Speichern (S3) der ersten Daten auf einem Teilbereich eines dem konfigurierbaren Digitalbaustein zugeordneten Speichers, wobei ein Zugriff durch die erste Applikation auf den Teilbereich des Speichers gemäß einer vordefinierten ersten Regel erfolgt,
- Laden (S4) der zweiten Hardwareapplikation in die Ausführungsumgebung,
und
- Ausführen (S5) der zweiten Hardwareapplikation in der Ausführungsumgebung des konfigurierbaren Digitalbausteins in Abhängigkeit von mindestens einem Teil der ersten Daten, wobei ein Zugriff durch die zweite Hardwareapplikation auf den Teilbereich des Speichers gemäß einer vordefinierten zweiten Regel erfolgt.

2. Verfahren nach Anspruch 1, wobei die erste Regel und/oder die zweite Regel durch eine Funktion der Ausführungsumgebung definiert werden.

3. Verfahren nach Anspruch 1 oder 2, wobei die erste Regel abhängig von der ersten Hardwareapplikation und/oder die zweite Regel abhängig von der zweiten Hardwareapplikation definiert wird.

4. Verfahren nach einem der vorhergehenden Ansprüche, wobei die erste Hardwareapplikation und die zweite Hardwareapplikation gleichzeitig in unterschiedliche Bereiche der Ausführungsumgebung geladen werden.

5. Verfahren nach einem der Ansprüche 1 bis 3, wobei die zweite Hardwareapplikation zeitlich nach der ersten Hardwareapplikation in denselben Bereich der Ausführungsumgebung geladen wird.

6. Verfahren nach einem der vorhergehenden Ansprüche, wobei ein Zugriff auf den Teilbereich des Speichers durch die erste Hardwareapplikation und/oder durch die zweite Hardwareapplikation mittels eines kryptographischen Verfahrens geschützt wird.

7. Verfahren nach einem der vorhergehenden Ansprüche, wobei die ersten Daten mittels eines kryptographischen Verfahrens kryptographisch geschützt auf dem Teilbereich des Speichers gespeichert werden.

8. Verfahren nach Anspruch 6 oder 7, wobei ein kryptographischer Schlüssel zur Anwendung in dem kryptographischen Verschlüsselungsverfahren lediglich der jeweiligen Hardwareapplikation bereitgestellt wird, die gemäß der jeweiligen Regel Zugriff auf den Teilbereich des Speichers hat.

9. Verfahren nach einem der vorhergehenden Ansprüche, wobei der Teilbereich des Speichers und/oder der kryptographische Schlüssel gelöscht werden, sobald die erste Hardwareapplikation und/oder die zweite Hardwareapplikation aus der Ausführungsumgebung entfernt werden.

10. Verfahren nach einem der vorhergehenden Ansprüche, wobei der kryptographische Schlüssel abhängig von der in die Ausführungsumgebung geladenen ersten Hardwareapplikation und/oder der zweiten Hardwareapplikation generiert wird.

11. Verfahren nach einem der vorhergehenden Ansprüche, wobei der kryptographische Schlüssel in der Ausführungsumgebung bereitgestellt wird.

12. Verfahren nach einem der vorhergehenden Ansprüche, wobei die ersten Daten Zustandsdaten zu einem vorgegebenen Zeitpunkt der ersten Hardwareapplikation umfassen und die gespeicherten Zustandsdaten bei einem erneuten Laden der ersten Hardwareapplikation in die Ausführungsumgebung durch die erste Hardwareapplikation geladen werden.

13. Verfahren nach einem der vorhergehenden Ansprüche, wobei bei einem erneuten Zugriff auf die ersten Daten durch die erste Hardwareapplikation und/oder die zweite Hardwareapplikation geprüft wird, ob die erste und die zweite Hardwareapplikation in der Ausführungsumgebung geladen sind und der Zugriff abhängig vom Prüfergebnis erfolgt.

14. Konfigurierbarer Digitalbaustein umfassend
- eine Ausführungsumgebung, die derart eingerichtet ist, die erste Hardwareapplikation und/oder die zweite Hardwareapplikation zu laden, wobei die erste Hardwareapplikation und die zweite Hardwareapplikation jeweils eine Teilkonfiguration des konfigurierbarer Digitalbausteins beschreiben, und die erste Hardwareapplikation auszuführen, wobei erste Daten generiert werden, und die zweite Hardwareapplikation in Abhängigkeit von mindestens einem Teil der ersten Daten auszuführen,
- einen Speicher umfassend Teilbereiche, wobei der Speicher derart eingerichtet ist, die ersten Daten auf einem Teilbereich des Speichers zu speichern, wobei ein Zugriff durch die erste Hardwareapplikation auf den Teilbereich des Speichers gemäß einer vordefinierten ersten Regel erfolgt und ein Zugriff durch die zweite Hardwareapplikation auf den Teilbereich des Speichers gemäß einer vordefinierten zweiten Regel erfolgt.

15. Konfigurierbarer Digitalbaustein nach Anspruch 14 umfassend ein Sicherheitsmodul, das derart eingerichtet ist,
- die erste Regel und/oder die zweite Regel zu definieren,
und/oder
- den Teilbereich des Speichers zu löschen, sobald die erste Hardwareapplikation und/oder die zweite Hardwareapplikation aus der Ausführungsumgebung entfernt wird,
und/oder
- einen kryptographischen Schlüssel zur Anwendung eines kryptographischen Verfahrens zum Schutz des Zugriffs auf den Teilbereich des Speichers und/oder auf die ersten Daten bereitzustellen und/oder zu löschen.
